# EUROPÄISCHE PATENTANMELDUNG

(11) **EP 3 831 200 A1**
(43) Veröffentlichungstag der Anmeldung: **09.06.2021**
(21) Anmeldenummer: 19214107.5
(22) Anmeldetag: 06.12.2019
(51) Int. Cl.: A01K 7/00, A01K 9/00

(54) **TRÄNKEIMER UND SAUGVORRICHTUNG**

(71) Anmelder: HIKO GmbH, 89081 Ulm-Lehr (DE)
(72) Erfinder: Hinterkopf, Martin, 89081 Ulm (DE)
(74) Vertreter: Baur & Weber Patentanwälte PartG mbB

(57) **Zusammenfassung**

Ein Tränkeimer (1) umfasst eine Eimerwand (18), in der eine Aussparung (15) für eine Saugvorrichtung (3) angeordnet ist, und einem Eimerboden (19), wobei der Eimerboden (19) zwischen einem Bereich der Eimerwand (18) mit der Aussparung (19) und einem gegenüber liegenden Bereich der Eimerwand (18) asymmetrisch zur Längsachse (10) des Tränkeimers (1) verläuft, und wobei eine Senke (20) im Eimerboden (19) benachbart zu dem Bereich der Eimerwand (18) mit der Aussparung (19) ausgebildet ist und der Eimerboden (19) monoton abfallend zur Senke (20) verläuft.

Eine Saugvorrichtung (3) für solch einen Tränkeimer (1) kann an den Tränkeimer (1) montiert werden.

## Beschreibung

Die Erfindung betrifft einen Tränkeimer, insbesondere zur Aufzucht von Jungtieren, z. B. Kälbern oder Lämmern, und eine Saugvorrichtung für einen Tränkeimer.

Eine Tränkeimervorrichtung umfasst einen Tränkeimer mit einer Aussparung sowie eine Saugvorrichtung. Derartige Tränkeimervorrichtungen haben sich in der landwirtschaftlichen Praxis, insbesondere zum Tränken von Kälbern und Lämmern, seit vielen Jahrzehnten bewährt, denn sie erlauben die muttertierlose Aufzucht. Mittels einer Tränkeimervorrichtung wird Flüssigfutter, beispielsweise Milch oder Milchersatz, den Jungtieren dargereicht. Die Jungtiere saugen an der Saugvorrichtung, ähnlich wie an einer Muttertierzitze, um so das Flüssigfutter aufzunehmen.

Allerdings ist ein Problem konventioneller Tränkeimervorrichtungen, dass Flüssigkeitsreste am Eimerboden verbleiben, die vom Jungtier durch die Saugvorrichtung nicht mehr aus dem Tränkeimer gesaugt werden können. Es stellt sich die Aufgabe, solche Flüssigkeitsreste zu vermeiden oder zu reduzieren.

Diese Aufgabe wird durch einen Tränkeimer mit den Merkmalen des Patentanspruchs 1 gelöst sowie durch eine Saugvorrichtung für einen Tränkeimer mit den Merkmalen des Patentanspruchs 9.

Weitere vorteilhafte Ausgestaltungen der Erfindung sind jeweils Gegenstand der Unteransprüche. Diese können in technologisch sinnvoller Weise miteinander kombiniert werden. Die Beschreibung, insbesondere im Zusammenhang mit der Zeichnung, charakterisiert und spezifiziert die Erfindung zusätzlich.

Der Tränkeimer umfasst eine Eimerwand, in der eine Aussparung für eine Saugvorrichtung angeordnet ist, und einem Eimerboden. Der Eimerboden verläuft zwischen einem Bereich der Eimerwand mit der Aussparung und einem gegenüber liegenden Bereich der Eimerwand asymmetrisch zur Längsachse des Tränkeimers, insbesondere zumindest bereichsweise schräg. Eine Senke ist im Eimerboden benachbart zu dem Bereich der Eimerwand mit der Aussparung ausgebildet, und der Eimerboden verläuft monoton abfallend zur Senke.

Die Senke ist der tiefste Bereich des Eimerbodens. Der Eimerboden verläuft von der Eimerwand monoton abfallend, d.h. waagerecht oder schräg nach unten, zur Senke als tiefsten Bereich des Eimerbodens. Vorteilhafterweise ist der Verlauf zwischen Eimerwand und Senke streng monoton abfallend, d.h. jenseits der Senke sind keine waagerechten Bereiche des Eimerbodens. Obgleich die Senke als ebener Bereich ausgebildet sein kann, ist sie jedoch nicht symmetrisch zur Längsachse des Eimers angeordnet, sondern benachbart zum Wandbereich, in dem die Aussparung ist. Dabei muss die Senke nicht mittelbar an der Eimerwand angeordnet sein. "Waagerecht" und "schräg" bezieht sich auf die Orientierung eines stehenden Tränkeimers oder eines Tränkeimers, der in seiner, zum Tränken, vorgegebenen Position befestigt ist.

Da die Restflüssigkeit in die Senke als tiefstem Bereich des Eimerbodens fließt, kann sie von dort mit einer an der Aussparung montierten Saugvorrichtung zumindest nahezu restlos abgesaugt werden, sodass im Gegensatz zu einem Tränkeimer mit flachem Boden keine Flüssigkeitslache auf dem Eimerboden verbleibt.

In einer Ausführung weist der Eimerboden einen kantenlosen Verlauf auf, d.h. er verläuft glatt. Dies erleichtert Abfluss der Restflüssigkeit und Reinigung des Tränkeimers.

In einer Ausführung ist die Aussparung oberhalb der Senke angeordnet und derart ausgebildet, dass die Aussparung für eine Saugvorrichtung mit einem an der inneren Eimerwand angeordneten Ventil geeignet ist. Auf diese Weise lassen sich die Vorteile des schrägen Eimerbodens in Kombination mit einer konventionellen, innenwandig montierten Saugvorrichtung nutzen.

In einer anderen Ausführung sind die Senke und eine Unterkante der Aussparung in derselben Ebene, sodass die Schwerkraft dem Flüssigkeitsabfluss aus dem Eimer nicht entgegen steht. Die Aussparung solch einer Ausführung ist derart ausgebildet, dass sie für eine Saugvorrichtung mit einem an der äußeren Eimerwand montierten Ventil geeignet ist. Solch eine Saugvorrichtung benötigt keinen Platz zwischen Eimerboden und Aussparung an der Tränkeimerinnenseite.

In einer Ausführung weist der Tränkeimer eine Haltevorrichtung an der äußeren Eimerwand für eine Saugvorrichtung auf. Die Haltevorrichtung ist geeignet, dass die Saugvorrichtung sie hintergreift, um so eine sichere Montage der Saugvorrichtung an der äußeren Eimerwand zu ermöglichen. Die Haltevorrichtung kann Profilschienen aufweisen, in die die Saugrichtung durch eine Translationsbewegung und/oder eine Rotationsbewegung schiebbar ist. Im letztgenannten Fall, können die Profilschienen bogenförmig verlaufen oder eine bogenförmige Innenwand haben, die eine Translationsbewegung beim Hineindrehen verhindern. In einer Ausführung weist die Haltevorrichtung eine Rastvorrichtung zur Positionsfixierung auf. In einem weiteren Ausführungsbeispiel ist eine Bajonettverbindung, mit einer Steck-Dreh-Verbindung, zwischen Tränkeimer und Saugvorrichtung vorgesehen.

Die Saugvorrichtung für einen Tränkeimer umfasst ein Ventil mit einer Vorderseite und einer Rückseite aufweisend einen Flüssigkeitskanal, der sich von der Rückseite zur Vorderseite erstreckt, und eine Ventilklappe an der Vorderseite, wobei die Rückseite auf eine äußere Eimerwand des Tränkeimers mit einer Aussparung aufsetzbar oder aufgesetzt ist, sodass vorteilhafterweise der Flüssigkeitskanal vor der Aussparung positioniert ist. Die Saugvorrichtung umfasst ferner einen elastischen Saugnuckel mit einem Flansch, wobei der Saugnuckel auf der Vorderseite des Ventils aufsetzbar oder aufgesetzt ist, sodass der Flansch auf einem Peripheriebereich des Ventils angeordnet ist. Die Saugvorrichtung umfasst ferner einen Haltekörper mit einer Aussparung und einen Haltebereich, wobei der Haltekörper auf den Flansch derart aufsetzbar oder aufgesetzt ist, dass der Saugnuckel sich durch die Aussparung erstreckt, und wobei der Haltebereich zum Hintergreifen einer Haltevorrichtung an der äußeren Eimerwand des Tränkeimers geeignet ist, um das Ventil mit aufgesetztem Saugnuckel am Tränkeimer zu befestigen.

Die Saugvorrichtung kann an eine der oben beschriebenen Ausführungen des Tränkeimers montiert werden. Durch Befestigung an der äußeren Eimerwand wird kein Platz im Eimerinneren für die Saugvorrichtung benötigt, sodass die Senke des Tränkeimers sich direkt bis zur Aussparung in der Eimerwand erstrecken kann. Das Ventil reguliert den Durchfluss und verhindert mittels der Ventilklappe ein Zurückfließen der Flüssigkeit, die durch den Saugnuckel abgegeben wird. Der Haltekörper hält das Ventil und den darauf aufsitzenden Saugnuckel in ihren Positionen und drückt sie an die äußere Eimerwand.

Wegen der geringen Anzahl von Komponenten kann die Saugvorrichtung leicht gereinigt werden. Dieser Effekt wird noch durch einen geraden Verlauf des Flüssigkeitskanals unterstützt.

In einer Ausführung weist der Haltebereich eine Rastvorrichtung auf, die eine Rastverbindung mit einer korrespondierenden Rastvorrichtung an der Haltevorrichtung des Tränkeimers bilden kann.

In einer Ausführung ist der Haltebereich als zumindest ein Haltevorsprung ausgebildet. Dies sind ein oder mehrere sich radial erstreckende Vorsprünge an der Außenseite des Haltekörpers. Der Haltevorsprung kann in eine Richtung zunehmende Dicke aufweisen, sodass mit dem Einschieben in die Haltevorrichtung das Ventil zunehmend an die Eimerwand gedrückt wird. Die Richtung, in der die Dicke zunimmt, hängt von der Einschubbewegung ab.

In einem weiteren Ausführungsbeispiel ist eine Bajonettverbindung, mit einer Steck-Dreh-Verbindung, zwischen Tränkeimer und Saugvorrichtung vorgesehen. Der Tränkeimer und der Haltebereich weisen korrespondierende Bajonettverbindungsvorrichtungen auf.

In einer Ausführung weist das Ventil eine Rastvorrichtung auf, die als umlaufende Nut in einem Seitenbereich des Ventils ausgebildet ist, und der Saugnuckel weist eine korrespondierende Rastvorrichtung auf, die als umlaufende Erhöhung ausgebildet ist. Solch eine Rastvorrichtung sorgt für sichere Passung und hat eine zusätzliche Dichtwirkung.

In einer Ausführung weist das Ventil einen scheibenförmigen Bereich auf, der geeignet ist, mit der äußeren Eimerwand des Tränkeimers benachbart zur Aussparung eine formschlüssige Verbindung zu bilden, um Flüssigkeitsaustritt zu vermeiden. Die Dichtwirkung kann durch eine Dichtung zwischen der Eimerwand und dem Ventil, die vorteilhafterweise am Ventil vorgesehen ist, verstärkt werden.

In einer Ausführung weist zumindest eine Komponente aus der Gruppe mit Ventil, Saugnuckel und Haltekörper eine Codierung auf, die eine vorgegebene Orientierung der Komponente relativ zu den anderen Komponenten oder dem Tränkeimer anzeigt. Solch eine Codierung kann als Erhöhung, Vertiefung, Kerbe oder andere Markierung ausgebildet sind, um der Benutzerin oder dem Benutzer die vorgegebene Orientierung der Komponenten bei der Montage anzuzeigen.

Eine Tränkeimervorrichtung umfasst den oben beschriebenen Tränkeimer oder eine seiner Ausführungen mit der oben beschriebenen Saugvorrichtung oder eine ihrer Ausführungen, die am Tränkeimer befestigt ist.

Nachfolgend werden Ausführungsbeispiele der Erfindung anhand der Zeichnung näher erläutert.
Figur 1 zeigt eine dreidimensionale Darstellung eines Ausführungsbeispiels einer Tränkeimervorrichtung mit einem Tränkeimer und einer Saugvorrichtung.
Figur 2 zeigt den Tränkeimer.
Figur 3 zeigt einen Längsschnitt durch den Tränkeimer.
Figur 4 zeigt eine dreidimensionale Schnittansicht der Tränkeimervorrichtung.
Figur 5 zeigt eine dreidimensionale Darstellung eines Ausführungsbeispiels eines Ventils von vorn.
Figur 6 zeigt eine dreidimensionale Darstellung des Ventils von hinten.
Figur 7 zeigt eine Detailansicht der Tränkeimervorrichtung in einer Längsschnittansicht.
Figur 8 zeigt eine dreidimensionale Darstellung eines Ausführungsbeispiels eines Haltekörpers.
Figur 9 zeigt eine Längsschnittansicht eines weiteren Ausführungsbeispiels einer Tränkeimervorrichtung mit einem Tränkeimer und einer Saugvorrichtung.

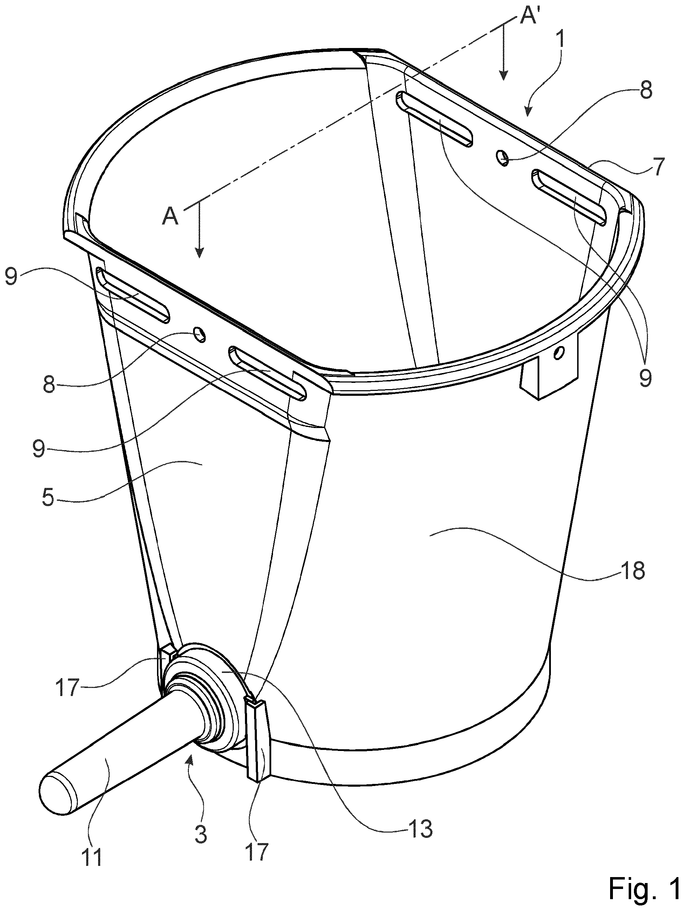

Figur 1 zeigt ein Ausführungsbeispiel einer Tränkeimervorrichtung mit einem Tränkeimer 1 und einer daran montierten Saugvorrichtung 3.

Der Tränkeimer 1 ist ein oben offenes Behältnis mit zylindrischer, leicht konischer Grundform und an seiner Unterseite durch einen Eimerboden geschlossen. Das in Figur 1 gezeigte Ausführungsbeispiel hat eine abgeflachte Vorderseite 5 und eine abgeflachte Rückseite 7 mit schlitzförmigen Aussparungen 9 im oberen Randbereich des Tränkeimers 1 zur Befestigung des Tränkeimers 1, beispielsweise durch Einhängen. Die abgeflachte Vorder- und Rückseite 5, 7 bildet eine größere Auflagefläche bei der Befestigung des Tränkeimers 1 an einem flächen Bereich, z.B. eine Wand, ein Brett oder ein Stallgitter. Des Weiteren sind runde Aussparungen 8 im oberen Randbereich des Tränkeimers 1 vorgesehen, an denen Schilder oder Markierungsclips (in Figur 1 nicht dargestellt) am Tränkeimer 1 befestigt werden können, um Informationen über den Eimerinhalt, z.B. die Art des Flüssigfutters, oder seinen Zweck, z.B. das zu fütternde Jungtier, bereitzustellen.

Im unteren Bereich des Tränkeimers 1 ist in der Eimerwand 18 eine Aussparung, vor der die Saugvorrichtung 3 montiert ist. Die Saugvorrichtung 3 umfasst einen elastischen Saugnuckel 11 auf einem Ventil (in Figur 1 nicht erkennbar), die mittels eines Haltekörpers 13 in einer Haltevorrichtung 17 am Tränkeimer 1 befestigt sind. Dabei hintergeifen Haltebereiche an gegenüberliegenden Seiten des Haltekörpers 13 die Haltevorrichtung 17, um so die Saugvorrichtung 3 an der äußeren Eimerwand 18 zu halten und zu befestigen. Die Haltevorrichtung 17 umfasst in diesem Ausführungsbeispiel L-förmige Profilschienen, deren abgewinkelte Kanten der Aussparung, und der Saugvorrichtung 3, zugewandt sind und hinter die die Haltebereiche des Haltekörpers 13 geschoben werden, sodass sie die Profilschienen hintergreifen. In diesem Ausführungsbeispiel erfolgt das Hineinschieben durch eine Drehbewegung, deren Richtung vorgegeben ist, da das obere Ende einer der Profilschienen geschlossen ausgebildet ist, sodass der eine Haltebereich in diese Profilschiene nur von unten hineingedreht werden kann. Die andere Profilschiene ist an ihrem oberen Ende offen, sodass der andere Haltebereich in diese Profilschiene nur von oben hineingedreht werden kann.

Solch ein Tränkeimer 1 kann aus Kunststoff, beispielsweise im Spritzgussverfahren, gefertigt werden, vorteilhafterweise derart, dass die Haltevorrichtung 17 integraler Bestandteil des Tränkeimers 1 ist.

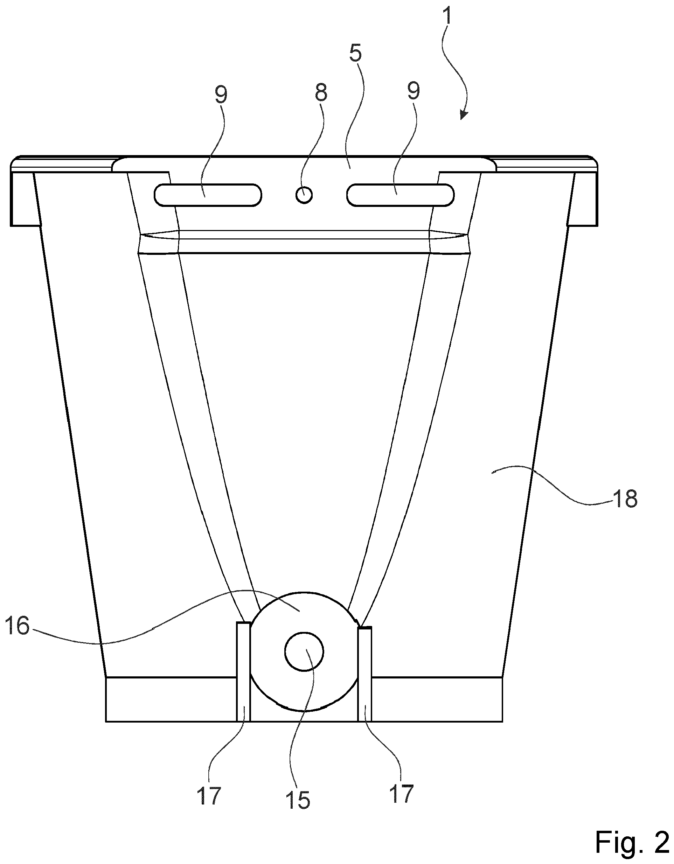

Figur 2 zeigt den Tränkeimer 1 aus Figur 1 in der Vorderansicht.

Der Tränkeimer 1 umfasst die Eimerwand 18 und den Eimerboden 19 an seiner Unterseite. Im unteren Bereich der Eimerwand 18 ist eine Aussparung 15 als kreisförmiges Loch ausgebildet, vor der die Saugvorrichtung 3 (in Figur 2 nicht dargestellt) montierbar ist.

Die Aussparung 15 ist in diesem Ausführungsbeispiel so positioniert, dass ihre Unterkante bündig, oder bis auf einen abgerundeten Übergang von Unterkante zu Eimerboden 19 nahezu bündig, mit dem Eimerboden 19 an dieser Stelle ist. Der Bereich 16 der Eimerwand 18 benachbart zur Aussparung 15 ist derart ausgebildet, dass er eine formschlüssige Verbindung mit der darauf aufgesetzten Saugvorrichtung 3 bildet. Die kann beispielsweise durch eine plane Ausgestaltung erfolgen.

Die Haltevorrichtung 17 für die Saugvorrichtung 3 umfasst zwei L-förmige Profilschienen an gegenüberliegenden Seiten der Aussparung 15, die als integraler Bestandteil des Tränkeimers 1 ausgebildet sein können.

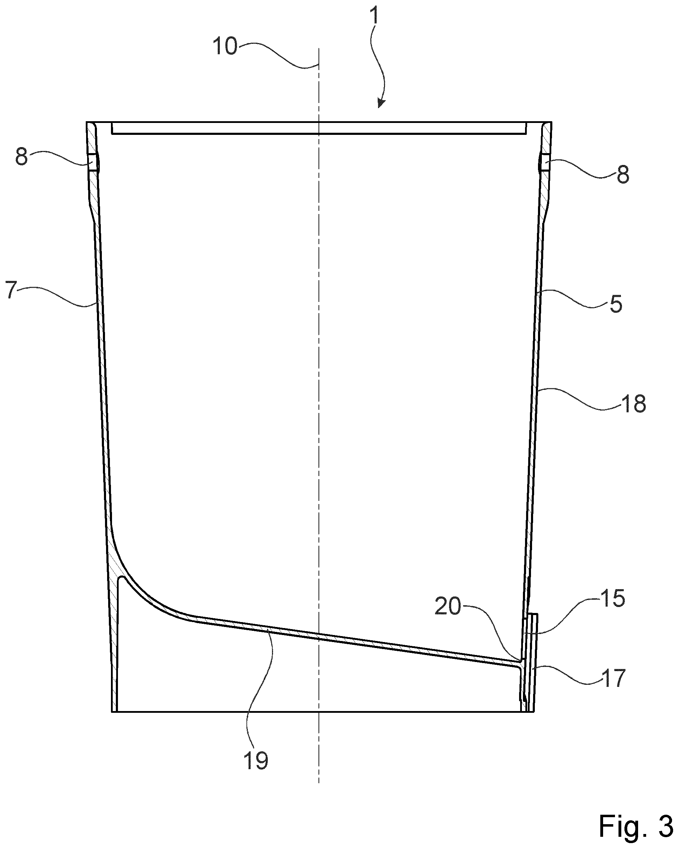

Figur 3 zeigt einen Längsschnitt durch den Tränkeimer 1 entlang der Linie AA' aus Figur 1.

Der Eimerboden 19 verläuft zwischen einem Bereich der Eimerwand 18 mit der Aussparung 15 und einem gegenüber liegenden Bereich der Eimerwand 18 asymmetrisch zur Längsachse 10 des Tränkeimers 1. Eine Senke 20 im Eimerboden 19 ist benachbart zu dem Bereich der Eimerwand 18 mit der Aussparung 15 ausgebildet, und der Eimerboden 19 verläuft monoton abfallend zur Senke 20. Mit anderen Worten: Die ist Senke ist asymmetrisch zur Längsachse 10 positioniert. Die Senke 20 ist der tiefste Bereich des Eimerbodens 19. Sie ist in diesem Ausführungsbeispiel an der Unterkante der Aussparung 15.

Der Eimerboden 19 verläuft zumindest monoton abfallend zur Senke 20, was in diesem Ausführungsbeispiel monoton abfallend zur Aussparung 15 ist. "Monoton abfallend" heißt, dass der Eimerboden 19 zwischen Senke 20 und Eimerwand 18 entweder waagerecht oder zur Senke 20 hin abfallend verläuft, jedoch nicht ansteigt. "Waagerecht" und "abfallend" bezieht sich auf einen stehenden Eimer oder einen in einer vorgegebenen Positionen aufgehängten Eimer. Somit ist die Senke 20 der tiefste Bereich des Eimerbodens 19. In einem Ausführungsbeispiel mit streng monoton abfallendem Verlauf weist der Eimerboden bis auf die Senke 20, die als ebener Bereich ausgebildet sein kann, zwischen Eimerwand 18 und Senke 20 keine waagerecht verlaufenden Bereiche auf. In Figur 3 weist der Eimerboden 19 einen glatten Verlauf auf. Das heißt, er hat keine Kanten im Eimerboden 19, sondern hat abgerundeten Verlauf.

Durch den zur Senke 20 hin abfallenden Eimerboden 19 fließt die Flüssigkeit in Richtung der Senke 20 und damit in Richtung der Aussparung 15, sodass die gesamte Flüssigkeit durch die Aussparung 15 abfließen kann. Da die Senke 20 und die Unterkante der Aussparung in derselben Ebene sind, kann sich am Boden den Tränkeimers 1 keine Lache bilden, sondern die gesamte Flüssigkeit kann durch die Aussparung 15 abfließen. Dieser Effekt tritt auch auf, wenn der Tränkeimer 1 leicht abweichend von seiner gewünschten Position aufgehängt wird, da der schräge Eimerboden 19 auch bei leicht schräg positioniertem Tränkeimer 1 noch das Abfließen der Restflüssigkeit in die Senke 20 erzwingt. Dies ist insbesondere der Fall, wenn die Senke 20 unmittelbar an der Eimerwand 18 angeordnet ist.

Es sei noch bemerkt, dass selbst wenn die Unterkante der Aussparung 15 geringfügig oberhalb des tiefsten Bereichs des Eimerbodens 19 angeordnet ist, wesentlich weniger Restflüssigkeit im Tränkeimer 1 verbleibt als bei einem konventionellen ebenen Eimerboden.

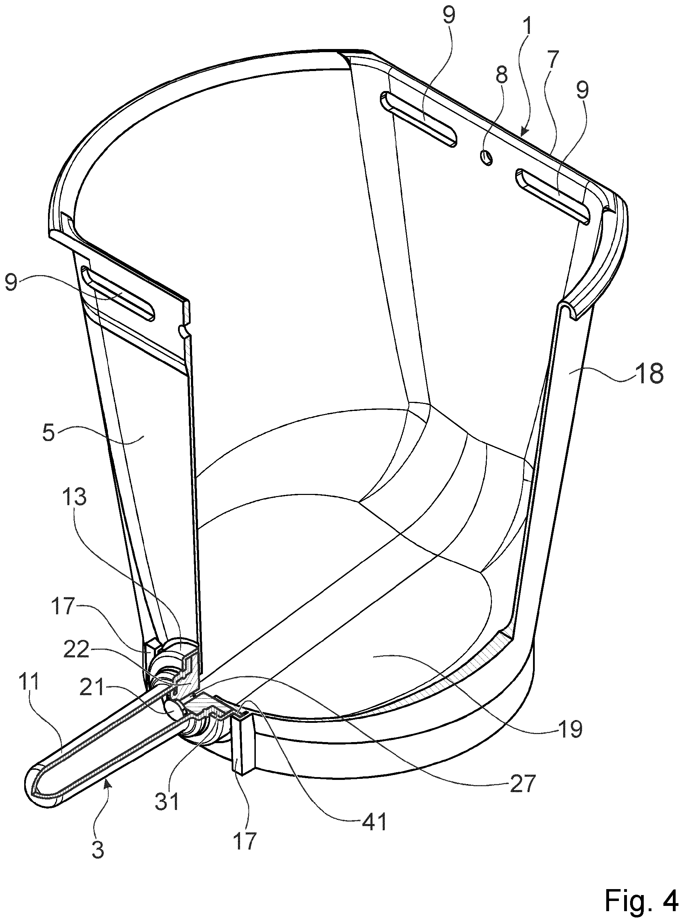

Figur 4 zeigt eine dreidimensionale Schnittansicht der Tränkeimervorrichtung aus Figur 1. Diese Darstellung zeigt den schrägt verlaufenden, gerundeten Eimerboden 19, der zur Senke 20 an der Saugvorrichtung 3 hin monoton abfallend ist. Die in Figur 4 geschnitten dargestellte Saugvorrichtung 3 wird im Zusammenhang mit den folgenden Figuren beschrieben.

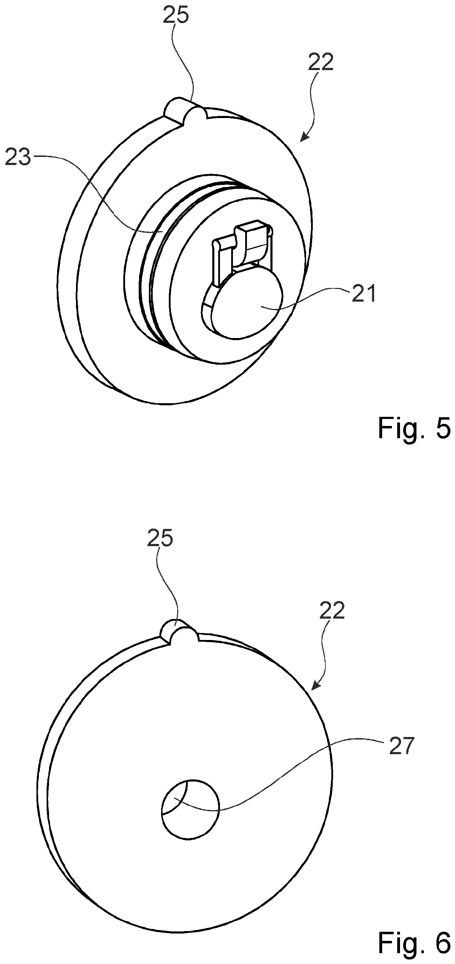

Die Figuren 5 und 6 zeigen dreidimensionale Darstellungen eines Ausführungsbeispiels des Ventils 22 der Saugvorrichtung 3. Figur 5 zeigt eine Ansicht von vorne, und Figur 6 zeigt eine Ansicht von hinten.

Das Ventil 22 hat eine kreisscheibenförmige Grundform mit einer zylinderförmigen Erhöhung auf seiner Vorderseite. Auf dem Seitenbereich der zylinderförmigen Erhöhung ist eine als umlaufende Nut 23 ausgebildete Rastvorrichtung. Das Ventil 22 umfasst einen Flüssigkeitskanal 27 der sich von der Rückseite zur Vorderseite des Ventils 22 erstreckt. Der Flüssigkeitskanal 27 verläuft gerade und hat einen kreisförmigen Querschnitt, der kleiner sein kann als die Aussparung 15 im Tränkeimer 1. An der Vorderseite ist eine Ventilklappe 21 angeordnet, die sich nach vorne öffnen lässt, sodass die Flüssigkeit nur von der Rückseite zur Vorderseite durch das Ventil 22 fließen kann. Ferner ist an der Außenseite des Ventils 22 eine als Vorsprung 25 ausgebildete Codierung vorgesehen, um eine gewünschte Orientierung des Ventils 22 bei der Montage anzuzeigen, sodass insbesondere die Ventilklappe 21 lagerichtig zum Tränkeimer 1 angeordnet ist, damit das Ventil 22 die gewünschte Durchflusssteuerung ermöglicht. Das Ventil 22 muss so montiert werden, dass die Codierung 25 nach oben zeigt. Das Ventil 22 kann aus Kunststoff gefertigt sein.

Bei montierter Saugvorrichtung 3 ist die Rückseite des Ventils 22 an der äußeren Eimerwand 18 vor der Aussparung 15 positioniert, sodass sich eine formschlüssige Verbindung zwischen dem zur Aussparung benachbarten Bereich 16 der Eimerwand 18 und dem Ventil 22 bildet, durch die keine Flüssigkeit entweichen kann. Obgleich solch eine flüssigkeitsdichte formschlüssige Verbindung zweier Kunststoffteile ausführbar ist, kann noch eine Dichtung, insbesondere an der Ventilrückseite, vorgesehen sein.

Bei montierter Saugvorrichtung 3 ist auf der Vorderseite des Ventils 22 der Saugnuckel 11 aufgesetzt, sodass Ventilvorderseite und Saugnuckelinneres einen Hohlraum formen, durch den die Flüssigkeit gesaugt werden kann.

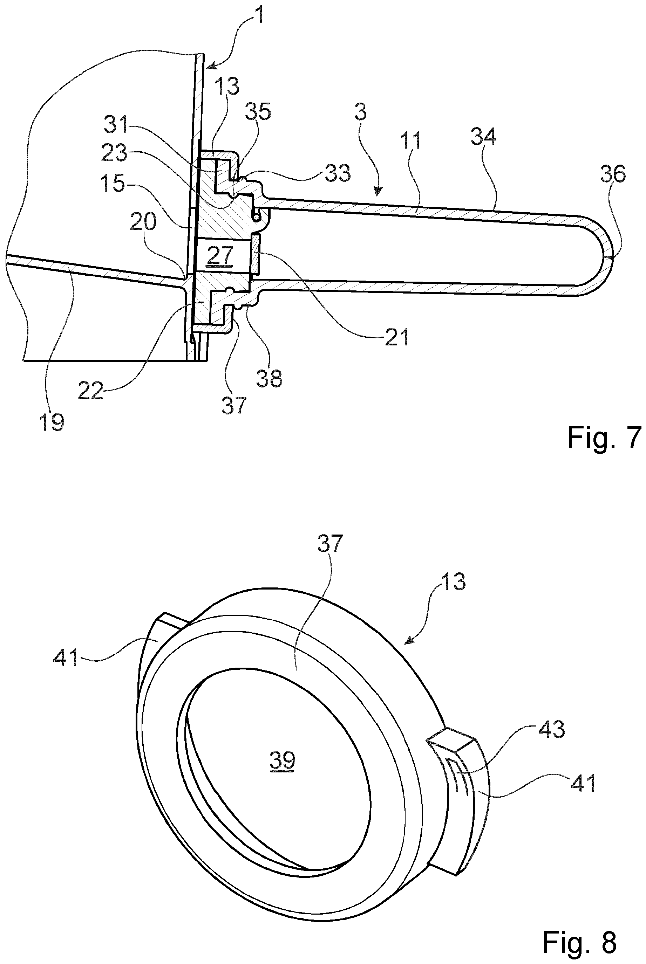

Figur 7 zeigt eine Detailansicht des unteren Tränkeimerbereiches mit montierter Saugvorrichtung 3 in einer Schnittansicht entlang der Linie AA' in Figur 1.

Die ganze Saugvorrichtung 3 mit dem Ventil 22, dem Saugnuckel 11 und dem Haltekörper 13 wird außenseitig an der äußeren Eimerwand 18 positioniert und dort mittels der Haltevorrichtung 17 befestigt.

Das Ventil 22 ist derart vor der Aussparung 15 positioniert, dass der Flüssigkeitskanal 27 vor der Aussparung 15 ist. Die Unterkante des Flüssigkeitskanals 27 und die Unterkante der Aussparung 15 sind zueinander ausgerichtet, sodass sie vorteilhafterweise mit der die Senke 20 in einer Ebene sind, damit keine Flüssigkeit im Tränkeimer 1 verbleibt, sondern restlos durch die Aussparung 15 und den Flüssigkeitskanal 27 abfließen kann.

Auf die Vorderseite des Ventils 22 ist der Saugnuckel 11 aufgesetzt. Der Saugnuckel 11 umfasst einen langgestreckten, leicht konisch verlaufenden Frontbereich 34, an dessen abgerundeter Spitze eine Öffnung 36 ist, durch die die Flüssigkeit gesaugt werden kann. Der Frontbereich 34 hat eine zitzenförmige Gestalt, um dem Jungtier eine Nahrungsaufnahme ähnlich wie bei der Muttertierhaltung zu ermöglichen.

Die Öffnung 36 des Frontbereichs 34 ist als zwei sich kreuzende Schlitze ausgebildet und ermöglicht wegen der Elastizität des Saugnuckelmaterials lediglich dann Flüssigkeitsaustritt, wenn der Saugnuckel 11, insbesondere durch das saugende Jungtier, verformt wird.

Ein Fußbereich 38 des Saugnuckels 11 umfasst als ringförmige Verbreiterung am Ende des Saugnuckels 11 einen Flansch 31, der auf einen Peripheriebereich an der Vorderseite des Ventils 22 angeordnet ist. Der Fußbereich 38 des Saugnuckels 11 hat einen treppenförmigen Querschnittverlauf, sodass seine Form mit der Vorderseite des Ventils 22, insbesondere den Seitenbereichen der zylinderförmiger Erhöhung, korrespondiert. Im Fußbereich 38 sind sowohl eine innenseitig umlaufende Erhöhung 35 als auch eine außenseitig umlaufende Erhöhung 33 als Rastmittel ausgebildet. Die innenseitige Erhöhung 35 greift in die Nut 23 des Ventils 22 um eine Rastverbindung zwischen dem Ventil 22 und dem Saugnuckel 11 mit zusätzlicher Dichtwirkung zu bilden.

Ventilvorderseite und Saugnuckelinneres formen einen Hohlraum, durch den die Flüssigkeit vom Flüssigkeitskanal 27 zur Öffnung 36 fließt.

Das Ventil 22 und der Saugnuckel 11 werden durch den Haltekörper 13, der die Haltevorrichtung 17 an der Eimerwand 18 hintergreift, an der äußeren Eimerwand 18 befestigt und fixiert.

Figur 8 zeigt eine dreidimensionale Darstellung eines Ausführungsbeispiels eines Haltekörpers 13. Er hat eine ringförmige Grundform mit L-förmigem Profil, sodass er eine radial nach innen gerichtete Kante 37 aufweist, zwischen der und der Eimerwand 18 der Flansch 31 und die Peripherie des Ventils 22 gehalten werden. Der Haltekörper 13 hat eine kreisförmige Aussparung 39, durch die der Frontbereich 34 des Saugnuckels 11 führbar ist. Der Haltebereich umfasst Haltevorsprünge 41 an gegenüberliegenden Seiten des Haltekörpers 13. In einem alternativen, nicht dargestellten Ausführungsbeispiel, ist der Haltebereich auf der Oberseite der ringförmigen Grundform ausgebildet.

Die Haltevorsprünge 41 haben eine in Umlaufrichtung zunehmende Dicke sowie eine Rastnase 43 und sind punktsymmetrisch zueinander ausgebildet, da der Haltekörper 13 durch eine Drehbewegung in die Haltevorrichtung 17 geschoben wird.

Bei montierter Saugvorrichtung 3, wie in den Figuren 4 und 7 dargestellt, erstrecken sich der Frontbereich 34 des Saugnuckels 11 und die zylindrische Erhöhung des Ventils 22 durch die Aussparung 39. Der Flansch 31 des Saugnuckels 11 und die Peripherie des Ventils 22 hintergreifen die nach innen gerichtete Kante 37 des Haltekörpers 13. Die umlaufende Erhöhung 33 liegt auf der Kante 37 und dient als Rastvorrichtung, über die die Kante 37 bei der Montage geschoben werden muss.

Die Haltevorsprünge 41 hintergreifen die Profile der Haltevorrichtung 17, sodass der Haltekörper 13 den Saugnuckel 11 und das Ventil 22 an die äußere Eimerwand 18 drückt.

Bei der Montage der Saugvorrichtung 3 wird der Saugnuckel 11 auf die Vorderseite des Ventils 22 gesetzt, der Frontbereich 34 des Saugnuckels 11 durch die Aussparung 39 des Haltekörpers 13 geführt und die so bereits zusammen gesetzten Komponenten 11, 22, 13 auf den die Aussparung 15 umgebenden Bereich 16 der äußeren Eimerwand 18 gesetzt und um ca. 90 Grad in die Haltevorrichtung 17 gedreht. Durch die radial zunehmende Dicke der Haltevorsprünge 41 wird mit zunehmender Drehung das Ventil 22 immer fester an die Eimerwand 18 gepresst. Durch Einrasten der Rastnasen 43 in korrespondierende Rastvorrichtungen der Haltevorrichtung 17, vorteilhafterweise begleitet durch ein Klickgeräusch, wird die erfolgreiche Montage signalisiert.

Die Demontage der Saugvorrichtung 3, beispielsweise zum Reinigen, erfolgt durch Herausschieben des Haltekörpers 13 aus der Haltevorrichtung 17 mit einer zur Montage entgegen gerichteten Bewegung und dem Auseinandernehmen der Komponenten 11, 22, 13 der Saugvorrichtung 3.

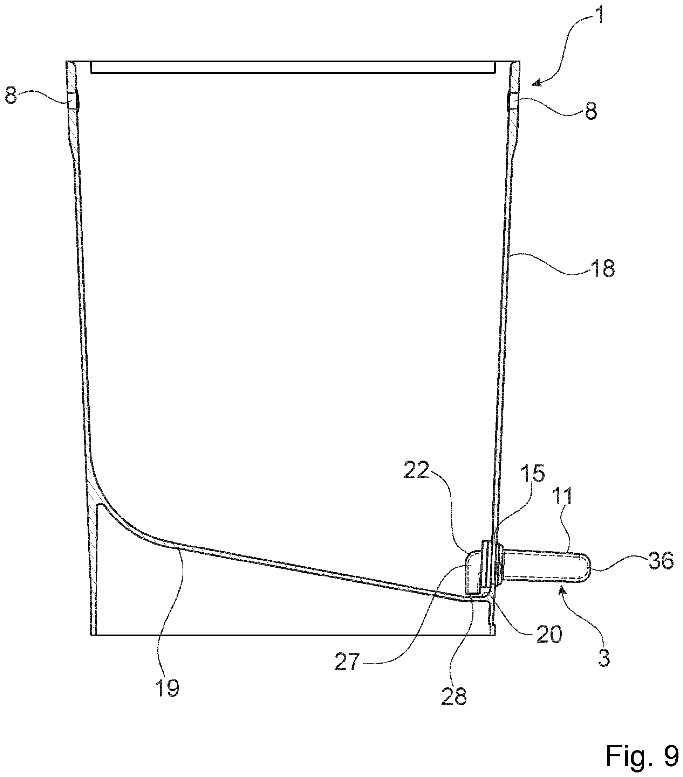

Figur 9 zeigt ein weiteres Ausführungsbeispiel einer Tränkeimervorrichtung in einer Längsschnittdarstellung durch den Tränkeimer 1 mit einer anderen Saugvorrichtung 3. Um Wiederholungen zu vermeiden, werden lediglich die Unterschiede zum vorangegangenen Ausführungsbeispiel erläutert.

In diesem Ausführungsbeispiel wird anstatt einer außenseitig montierten Saugvorrichtung 3, wie zuvor beschrieben, eine Saugvorrichtung 3 verwendet, die in konventioneller Weise an der Tränkeimerinnenseite montiert ist und bei der der Frontbereich des Saugnuckels 11 durch die Aussparung 15 in der Eimerwand 18 geführt wird. Auch das Ventil 22 erstreckt sich von der Tränkeimerinnenseite teilweise durch die Aussparung 15. Deshalb ist die Aussparung 15 größer als im vorangegangenen Ausführungsbeispiel.

Wegen der Montage an der Tränkeimerinnenseite muss die Aussparung 15 höher über dem Eimerboden 19 als im vorangegangenen Ausführungsbeispiel angeordnet sein, sodass sich noch ein Bereich der Eimerwand 18 zwischen dem Eimerboden 19 und der Aussparung 15 erstreckt.

Das Ventil 22 umfasst einen sich von der Aussparung 15 zum Eimerboden 19 erstreckenden Bereich, sodass der Flüssigkeitskanal 27 einen gebogenen Verlauf hat. Ein Eintrittsbereich 28 des Flüssigkeitskanals 27 ist der Senke 20 zugewandt und benachbart zur Eimerwand, jedoch von ihr beabstandet angeordnet.

Auch in diesem Ausführungsbeispiel verläuft der Eimerboden 19 schräg zur Senke 20 als tiefster Stelle des Eimerbodens 19. Die Senke 20 ist unterhalb des Eintrittsbereichs 28 des Flüssigkeitskanals 27. Angesichts der flächigen Ausdehnung des Eintrittsbereichs 28 ist die Senke 20 als ebener Bereich korrespondierender oder ähnlicher Ausdehnung ausgebildet. Die Flüssigkeit sammelt sich in der Senke 20 und kann trotz der Höhendifferenz zur Aussparung 15 aus der Senke 20 durch die Saugvorrichtung 3 gesaugt werden.

Der Eimerboden 19 verläuft zwischen der Eimerwand 18 und der Senke 20 zumindest monoton abfallend, was bereits in Zusammenhang mit Figur 3 erläutert worden ist. Vorteilhafterweise ist der Verlauf streng monoton abfallend und/oder kantenlos. In diesem Ausführungsbeispiel lassen sich die Vorteile des schrägen Eimerbodens 19 in Kombination mit einer konventionellen, innenwandig montierten Saugvorrichtung 3 nutzen.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

### Liste der Bezugszeichen:

- 1: Tränkeimer
- 3: Saugvorrichtung
- 5: Vorderseite
- 7: Rückseite
- 8: Aussparung
- 9: Aussparung
- 10: Längsachse
- 11: Saugnuckel
- 13: Haltekörper
- 15: Aussparung
- 16: Wandbereich
- 17: Haltevorrichtung
- 18: Eimerwand
- 19: Eimerboden
- 20: Senke
- 21: Ventilklappe
- 22: Ventil
- 23: Nut
- 25: Codierung
- 27: Flüssigkeitskanal
- 28: Eintrittsbereich
- 31: Flansch
- 33: Erhöhung
- 34: Frontbereich
- 35: Erhöhung
- 36: Öffnung
- 37: Kante
- 38: Fußbereich
- 39: Aussparung
- 41: Haltevorsprung
- 43: Rastnase

## Patentansprüche

1. Tränkeimer (1) mit
einer Eimerwand (18), in der eine Aussparung (15) für eine Saugvorrichtung (3) angeordnet ist,
und einem Eimerboden (19), wobei der Eimerboden (19) zwischen einem Bereich der Eimerwand (18) mit der Aussparung (19) und einem gegenüber liegenden Bereich der Eimerwand (18) asymmetrisch zur Längsachse (10) des Tränkeimers (1) verläuft, und wobei eine Senke (20) im Eimerboden (19) benachbart zu dem Bereich der Eimerwand (18) mit der Aussparung (19) ausgebildet ist und der Eimerboden (19) monoton abfallend zur Senke (20) verläuft.

2. Tränkeimer (1) nach Anspruch 1,
wobei der Eimerboden (19) einen kantenlosen Verlauf aufweist.

3. Tränkeimer (1) nach einem der vorhergehenden Ansprüche,
wobei die Senke (20) und eine Unterkante der Aussparung (15) in derselben Ebene sind.

4. Tränkeimer (1) nach einem der vorhergehenden Ansprüche,
wobei die Aussparung (15) oberhalb der Senke (20) angeordnet ist und derart ausgebildet ist, dass die Aussparung (15) für eine Saugvorrichtung (3) mit einem an der inneren Eimerwand (18) angeordneten Ventil (22) geeignet ist.

5. Tränkeimer (1) nach einem Ansprüche 1 bis 3,
wobei die Aussparung (15) derart ausgebildet ist, dass sie für eine Saugvorrichtung (3) mit einem an der äußeren Eimerwand (18) angeordneten Ventil (22) geeignet ist.

6. Tränkeimer (1) Anspruch 5,
aufweisend eine Haltevorrichtung (17) zum Hintergreifen durch die Saugvorrichtung (3) an der äußeren Eimerwand (18).

7. Tränkeimer (1) nach Anspruch 6,
wobei die Haltevorrichtung (17) Profilschienen aufweist, in die die Saugrichtung (3) durch eine Translationsbewegung und/oder Rotationsbewegung schiebbar ist.

8. Tränkeimer (1) nach Anspruch 6 oder 7,
wobei die Haltevorrichtung eine Rastvorrichtung aufweist.

9. Saugvorrichtung (3) für einen Tränkeimer (1) umfassend ein Ventil (22) mit einer Vorderseite und einer Rückseite aufweisend einen Flüssigkeitskanal (27), der sich von der Rückseite zur Vorderseite erstreckt, und eine Ventilklappe (21) an der Vorderseite, wobei die Rückseite auf eine äußere Eimerwand (18) des Tränkeimers (1) mit einer Aussparung (15) aufsetzbar oder aufgesetzt ist,
einen elastischen Saugnuckel (11) mit einem Flansch (31), wobei der Saugnuckel (11) auf der Vorderseite des Ventils (22) aufsetzbar oder aufgesetzt ist, sodass der Flansch (31) auf einem Peripheriebereich des Ventils (22) angeordnet ist,
und einen Haltekörper (13) mit einer Aussparung (39) und einen Haltebereich, wobei der Haltekörper (13) auf den Flansch (31) derart aufsetzbar oder aufgesetzt ist, dass der Saugnuckel (11) sich durch die Aussparung (39) erstreckt, und wobei der Haltebereich zum Hintergreifen einer Haltevorrichtung (17) an der äußeren Eimerwand (18) des Tränkeimers (1) geeignet ist, um das Ventil (22) mit aufgesetztem Saugnuckel (11) am Tränkeimer (1) zu befestigen.

10. Saugvorrichtung (3) nach Anspruch 9,
wobei der Haltebereich als zumindest ein Haltevorsprung (41) ausgebildet ist.

11. Saugvorrichtung (3) nach Anspruch 9 oder 10,
wobei der Haltevorsprung (41) eine in einer Richtung zunehmende Dicke aufweist.

12. Saugvorrichtung (3) nach einem der Ansprüche 9 bis 11,
wobei der Haltebereich eine Rastvorrichtung (43) aufweist.

13. Saugvorrichtung (3) nach einem der Ansprüche 9 bis 12,
wobei das Ventil (22) eine Rastvorrichtung aufweist, die als umlaufende Nut (23) in einem Seitenbereich des Ventils (22) ausgebildet ist, und der Saugnuckel (11) eine korrespondierende Rastvorrichtung aufweist, die als umlaufende Erhöhung (35) ausgebildet ist.

14. Saugvorrichtung nach einem der Ansprüche 9 bis 13,
wobei das Ventil (22) einen scheibenförmigen Bereich aufweist, der geeignet ist, mit der äußeren Eimerwand (18) des Tränkeimers (1) benachbart zur Aussparung (15) eine formschlüssige Verbindung zu bilden.

15. Saugvorrichtung nach einem der Ansprüche 9 bis 14,
wobei zumindest eine Komponente aus der Gruppe mit dem Ventil (22), dem Saugnuckel (11) und dem Haltekörper (13) eine Codierung (25) aufweist, um eine vorgegebene Orientierung der Komponente relativ zu den anderen Komponenten oder dem Tränkeimer (1) anzuzeigen.
